# NEUE EUROPÄISCHE PATENTSCHRIFT

(11) **EP 0 302 242 B2**
(45) Veröffentlichungstag und Bekanntmachung des Hinweises auf die Entscheidung über den Einspruch: **25.03.1998**
(45) Hinweis auf die Patenterteilung: 24.07.1991
(21) Anmeldenummer: 88110674.4
(22) Anmeldetag: 05.07.1988
(51) Int. Cl.: C08F 10/02, C08F 2/38, C08F 4/64, C08F 4/655

(54) **Verfahren zur Herstellung eines Polyolefins mit einer breiten Molmassenverteilung**
Process for preparing a polyolefin with a large molecular weight distribution
Procédé de préparation d'une polyoléfine à grande distribution de poids moléculaire

(30) Priorität: 16.07.1987 DE 3723526
(43) Veröffentlichungstag der Anmeldung: 08.02.1989
(73) Patentinhaber: HOECHST AKTIENGESELLSCHAFT, 65926 Frankfurt am Main (DE)
(72) Erfinder: Franke, Rainer, Dr., D-6272 Niedernhausen (DE)

(56) Entgegenhaltungen:
- EP-A- 7
- EP-A- 0 057 352
- EP-A- 0 136 623
- DE-A- 2 259 516
- DE-A- 3 325 221
- FR-A- 2 016 081

## Beschreibung

Die vorliegende Erfindung bezieht sich auf ein Verfahren zur Herstellung eines Polyolefins mit einer extrem breiten Molmassenverteilung durch eine zweistufige Polymerisation.

Es ist bekannt, daß bimodales, d.h. zwei Molmassen besitzendes Polyethylen gegenüber dem monomodalen Polyethylen verbesserte Eigenschaften besitzt. Dies betrifft die Fließfähigkeit und die Spannungsrißbeständigkeit.

Bekannt ist ein Verfahren zur Herstellung von polymodalen Ethylenpolymerisaten, bei welchem Ethylen in zwei Stufen in Gegenwart einer halogenhaltigen aluminiumorganischen Verbindung, einer Übergangsmetallverbindung und verschiedenen Mengen Wasserstoff in jeder Stufe polymerisiert wird (vgl. DE-OS 18 00 695 = GB-PS 1 233 599).

Weiterhin ist ein Verfahren bekannt zur Herstellung von Olefinpolymerisaten durch eine zweistufige Polymerisation, wobei in der ersten Stufe bei einem niedrigen H₂/C₂H₄-Verhältnis ein hochmolekulares Polymerisat und in der zweiten Stufe bei einem hohen H₂/C₂H₄-Verhältnis ein niedermolekulares Polymerisat hergestellt wird (vgl. EP-A 57352). Als Katalysator dient unter anderem eine halogenhaltige Organoaluminiumverbindung zusammen mit dem Reaktionsprodukt zwischen einer Sauerstoff enthaltenden Organomagnesiumverbindung und einer Sauerstoff enthaltenden Organotitanverbindung, welche sich beide in Lösung befinden, und einem Aluminiumhalogenid.

Beide bekannten Verfahren liefern Polyolefine mit guter Verarbeitbarkeit und guten physikalischen Eigenschaften. Aus diesen Polyolefinen hergestellte Folien zeigen nur wenige Stippen. Jedoch muß bei beiden Verfahren die das Übergangsmetall enthaltende Katalysatorkomponente nach ihrer Herstellung durch Waschen mit einem inerten Lösemittel von überschüssigen Reaktionsprodukten befreit werden. Die entstehenden Waschlaugen müssen aufgearbeitet werden, was sehr aufwendig, teuer und umweltbelastend ist. Außerdem werden gemäß EP-A 57352 halogenhaltige Aluminiumalkyle als Aktivatoren verwendet. Dies führt zu einem höheren Halogengehalt im Polymerisat. Eine Folge davon ist eine höhere Korrosivität und demzufolge eine größere Menge Säurefänger im Polymerisat, um Korrosionen an Maschinenteilen zu verhindern.

Bekannt ist auch ein Verfahren zur Homo- und Mischpolymerisation von Ethylen bei einer Temperatur von 150 bis 350°C und einem Druck von 300 bis 3500 bar in Gegenwart eines Katalysators aus einer aluminiumorganischen Verbindung und einer Titanverbindung (vgl. EP-A 136 623). Die Titanverbindung ist das Umsetzungsprodukt eines Titansäureesters mit dem Produkt der Reaktion eines Magnesiumalkoholats und einer Halogen enthaltenden Aluminiumalkylverbindung. Bei diesem Verfahren wird jedoch ein Umsatz von nur 30%, bezogen auf das eingesetzte Ethylen, erzielt. Außerdem entsteht kein bimodales Polyethylen.

Schließlich ist ein Verfahren zur Polymerisation von alpha-Olefinen bekannt, bei welchem ein Katalysator verwendet wird, dessen Übergangsmetallkomponente durch Umsetzung eines Magnesiumalkoholats mit einer vierwertigen, halogenhaltigen Titanverbindung und Waschen des festen Reaktionsproduktes mit einem inerten Lösemittel entstanden ist (vgl. DE-AS 17 95 197 = US-PS 3 664 318). In diesem Verfahren werden jedoch nur Polyolefine mit sehr enger Molmassenverteilung erhalten, die nicht für alle Anwendungen geeignet sind.

Es bestand somit die Aufgabe, ein Verfahren zu finden, in welchem Polyolefine mit guter Verarbeitbarkeit, guten physikalischen Eigenschaften und vielseitiger Verwendbarkeit erhalten werden und welches einfach durchzuführen ist.

Es wurde gefunden, daß die Aufgabe mit einem zweistufigen Verfahren unter Verwendung eines modifizierten Trägerkatalysators gelöst werden kann.

Gegenstand der Erfindung ist somit ein Verfahren zur Herstellung eines Polyolefins durch zweistufige Polymerisation von Ethylen mit 0 bis 10 Gew.-%, bezogen auf die Gesamtmenge der Monomeren, eines 1-Olefins der Formel R⁶-CH=CH₂, worin R⁶ einen geradkettigen oder verzweigten Alkylrest mit 1 bis 12 C-Atomen bedeutet, in Suspension oder in der Gasphase, bei einer Temperatur von 20 bis 120°C und einem Druck von 2 bis 60 bar, in Gegenwart eines Mischkatalysators, bestehend aus einer Übergangsmetallkomponente (Komponente (a)), welche das Reaktionsprodukt eines Magnesiumalkoholats mit einer Titanverbindung und einer aluminiumorganischen Verbindung ist, und einer aluminiumorganischen Verbindung, unter Regelung der mittleren Molmasse durch Wasserstoff, dadurch gekennzeichnet, daß die Polymerisation in Gegenwart eines Mischkatalysators durchgeführt wird, dessen Komponente (a) durch Umsetzung eines in einem inerten Dispergiermittel suspendierten Magnesiumalkoholats der Formel (I)

Mg(OR¹)(OR²) (I),

worin R¹ und R² gleich oder verschieden sind und einen Alkylrest mit 1 bis 6 C-Atomen bedeuten, mit einer Titan-IV-verbindung der Formel (II)

TiXₘ(OR³)₄₋ₘ (II),

worin R³ einen Alkylrest mit 1 bis 6 C-Atomen und X ein Chloratom bedeuten und m eine Zahl von 2 bis 4 ist, und anschließende Reaktion des entstandenen Feststoffes mit einer aluminiumorganischen Verbindung der Formel (III)

AlR⁴ₙX₃₋ₙ (III),

worin R⁴ einen Alkylrest mit 1 bis 12 C-Atomen und X ein Chloratom bedeuten und n eine Zahl von 1 bis 2 ist, hergestellt wurde und nur in die erste Polymerisationsstufe eingebracht wird, und wobei die Komponente (b) des Mischkatalysators ein Aluminiumtrialkyl mit 1 bis 12 C-Atomen in den Alkylresten oder Aluminiumisoprenyl ist und (b) ebenfalls kontinuierlich in die erste Stufe, gegebenenfalls zusätzlich in die zweite Stufe, zugegeben wird, das Molverhältnis von Komponente (a) zu Komponente (b), bezogen auf Titan und Aluminium, 1 : 1 bis 1 : 500 beträgt, das Molverhältnis Wasserstoff zu Ethylen im Gasraum in der einen Polymerisationsstufe 1 : 0,01 bis 1 : 0,5 und in der anderen Polymerisationsstufe 1 : 0,1 bis 0,1 : 8 ist und das Mengenverhältnis der in beiden Polymerisationsstufen gebildeten Polyolefine 30 : 70 bis 70 : 30 beträgt, wobei das in der Reaktionsstufe 1 gebildete Polymere kontinuierlich in die Stufe 2 überführt wird und das endgültige Polymergemisch aus Stufe 2 abgezogen wird.

Zur Herstellung des erfindungsgemäß zu verwendenden Mischkatalysators wird ein Magnesiumalkoholat der Formel (I)

Mg(OR¹)(OR²) (I),

worin R¹ und R² gleich oder verschieden sind und einen Alkylrest mit 1 bis 6, vorzugsweise 2 bis 4 C-Atomen bedeuten, verwendet, Beispiele sind Mg(OCH₃)₂, Mg(OC₂H₅)₂, Mg(O-i-C₃H₇)₂, Mg(O-n-C₃H₇)₂, Mg(O-n-C₄H₉)₂, Mg(OCH₃)(OC₂H₅), Mg(OC₂H₅)(O-n-C₃H₇). Bevorzugt verwendet werden die einfachen Magnesiumalkoholate Mg(OC₂H₅)₂, Mg(O-n-C₃H₇)₂ und Mg(O-i-C₄H₉)₂.

Das Magnesiumalkoholat wird in einem inerten Dispergiermittel mit einer vierwertigen Titanverbindung der Formel (II)

TiXₘ(OR³)₄₋ₘ (II),

worin R³ einen Alkylrest mit vorzugsweise 1 bis 3 C-Atomen bedeutet, umgesetzt.

Beispielsweise seien genannt TiCl₄, Ti(OC₂H₅)Cl₃, Ti(OC₂H₅)₂Cl₂, Ti(O-i-C₃H₇)₂Cl₂, Ti(O-n-C₄H₉)₂Cl₂, Ti(O-i-C₄H₉)₂Cl₂. Vorzugsweise werden TiCl₄ und Ti(O-n-C₄H₉)₂Cl₂ verwendet.

Die Umsetzung des Magnesiumalkoholats mit der Titanverbindung erfolgt üblicherweise bei einer Temperatur von 0 bis 150°C, vorzugsweise bei 50 bis 120°C. Die Titanverbindung wird üblicherweise innerhalb 0,5 bis 20, vorzugsweise innerhalb 3 bis 10 h mit dem Magnesiumalkoholat zusammengebracht, vorzugsweise durch Zugabe einer Lösung der Titanverbindung zu einer Suspension des Magnesiumalkoholats.

Der entstandene Feststoff wird sodann umgesetzt mit einer halogenhaltigen aluminiumorganischen Verbindung der Formel (III)

AlR⁴ₙX₃₋ₙ (III),

worin R⁴ einen Alkylrest mit 1 bis 12, vorzugsweise 1 bis 4 C-Atomen bedeuten, X ein Chloratom ist und n eine Zahl von 1 bis 2. Geeignete aluminiumorganische Verbindungen sind Al(C₂H₅)₂Cl, Al(C₂H₅)₂Cl, Al(C₂H₅)Cl₂, Al(n-C₃H₇)₂Cl, Al(n-C₃H₇)Cl₂, Al(n-C₄H₉)Cl₂, Al(i-C₄H₉)₂Cl, Al(i-C₄H₉)Cl₂, Al(C₂H₅)Cl₂, Al(n-C₄H₉)₂Cl, sowie äquimolare Mischungen der Mono- und Dihalogenide, die sogenannten Aluminiumalkylsesquihalogenide oder Mischungen von Mono-und Dihalogeniden verschiedener Zusammensetzung. Vorzugsweise werden aus dieser Gruppe Al(C₂H₅)Cl₂ und Al₂(C₂H₅)₃Cl₃ verwendet.

Die Umsetzung erfolgt üblicherweise bei einer Temperatur von 0 bis 150°C, vorzugsweise bei 50 bis 120°C, wobei die Reaktionspartner üblicherweise innerhalb 0,5 bis 20, vorzugsweise innerhalb 2 bis 8 h zusammengebracht werden.

Als inerte Dispergiermittel für die vorgenannten Umsetzungen eignen sich aliphatische oder cycloaliphatische Kohlenwasserstoffe wie Butan, Pentan, Hexan, Heptan, Cyclohexan, Methylcyclohexan, Isooctan sowie aromatische Kohlenwasserstoffe wie Benzol, Xylol. Auch Benzin- und hydrierte Dieselölfraktionen, die sorgfältig von Sauerstoff, Schwefelverbindungen und Feuchtigkeit befreit worden sind, können eingesetzt werden.

Magnesiumalkoholat, vierwertige Titanverbindung und aluminiumorganische Verbindung werden im Verhältnis Mg : Ti : Al üblicherweise wie 1 : 0,05 bis 2 : 0,3 bis 5, vorzugsweise 1 : 0,2 bis 1,0 : 0,4 bis 1,5 eingesetzt.

Die so hergestellte Suspension der Katalysatorkomponente (a) wird direkt zur Polymerisation verwendet.

Als Katalysatorkomponente (b) wird ein Aluminiumtrialkyl mit 1 bis 12 C-Atomen in den Alkylresten, beispielsweise Al(C₂H₅)₃, Al(i-C₄H₉)₃, Al(i-C₈H₁₇)₃, oder das als "Aluminiumisoprenyl" bekannte Umsetzungsprodukt eines Aluminiumtrialkyls oder -dialkylhydrids mit Isopren verwendet. Bevorzugt ist Al(C₂H₅)₃.

Die Polymerisation wird zweistufig, vorzugsweise als Suspensionspolymerisation in einem inerten Dispergiermittel durchgeführt. Als Dispergiermittel sind die gleichen Lösemittel geeignet, wie sie zur Herstellung der Katalysatorkomponente (a) beschrieben wurden. Möglich ist jedoch auch eine Polymerisation in der Gasphase.

Die Reaktionstemperatur in beiden Reaktionsstufen beträgt 20 bis 120°C, vorzugsweise 70 bis 90°C. Der Druck liegt im Bereich von 2 bis 60, vorzugsweise 4 bis 20 bar.

Die Katalysatorkomponente (a) wird kontinuierlich ausschließlich in die erste Reaktionsstufe eingeführt. Die Katalysatorkomponente (b) wird ebenfalls kontinuierlich in die erste Stufe, gegebenenfalls zusätzlich in die zweite Stufe eingebracht. Das Verhältnis von Komponente (a) zu Komponente (b), bezogen auf Titan und Aluminium, beträgt 1 : 1 bis 1 : 500, vorzugsweise 1 : 5 bis 1 : 100.

In beiden Reaktionsstufen werden Polyolefine mit unterschiedlichen mittleren Molmassen gebildet, indem das Molverhältnis von Wasserstoff zu Ethylen im Gasraum der beiden Reaktionszonen durch Zufuhr von Ethylen und Wasserstoff auf Werte von 1 : 0,01 bis 1 : 0,5 in der einen Stufe und 1 : 0,1 bis 1 : 8 in der anderen Stufe eingestellt wird.

Das Mengenverhältnis der in den Reaktionsstufen 1 und 2 jeweils gebildeten Polyolefine liegt im Bereich von 30 : 70 bis 70 : 30, wobei das in der Reaktionsstufe 1 gebildete Polymere kontinuierlich in die Stufe 2 überführt wird. Das endgültige Polymergemisch wird kontinuierlich aus Stufe 2 abgezogen.

In der ersten Reaktionsstufe kann Polymeres gebildet werden, welches eine höhere oder eine niedrigere mittlere Molmasse besitzt als das in der zweiten Stufe gebildete Produkt. Hat es eine höhere mittlere Molmasse, so liegt seine Viskositätszahl im Bereich von 1400 bis 200 cm³/g (gemessen in 0,1%iger Dekahydronaphthalinlösung bei 135°C), andernfalls im Bereich von 40 bis 150 cm³/g. Die Viskositätszahl des Produktes der zweiten Reaktionsstufe liegt im Bereich von 200 bis 500 cm³/g. Die in-situ-Mischung zweier Komponenten mit stark unterschiedlicher mittlerer Molmasse ergibt ein Gesamtoplymerisat mit extrem breiter bimodaler Molmassenverteilung.

Mit dem erfindungsgemäß zu verwendenden Katalysatorsystem wird Ethylen oder Ethylen mit bis zu 10 Gew.-%, bezogen auf die Gesamtmenge der Monomeren, eines 1-Olefins der Formel R⁶-CH=CH₂, worin R⁶ einen geradkettigen oder verzweigten Alkylrest mit 1 bis 12, vorzugsweise 1 bis 10 C-Atomen bedeutet, polymerisiert. Beispiele sind Propylen, 1-Buten, 1-Penten, 1-Hexen, 4-Methylpenten-1, 1-Octen, vorzugsweise werden Propylen, Buten und Hexen eingesetzt. Dabei wird das Comonomere vorzugsweise in die Stufe, in welcher ein Polymerisat mit der höheren Molmasse erzeugt wird, eingeführt.

Das Gesamtpolymerisat aus der zweiten Polymerisationsstufe wird in bekannter Weise vom Dispergiermittel abgetrennt und getrocknet.

Ein Vorteil des erfindungsgemäß zu verwendenden Katalysatorsystems besteht darin, daß es in Anwesenheit von Wasserstoff wesentlich weniger hydriert als vergleichbare bekannte Katalysatorsysteme. Das führt in dem erfindungsgemäßen Verfahren zu einer Verringerung der Ethanbildung und damit zur Erhöhung des Ethylenumsatzes.

Ein weiterer Vorteil dieses Katalysatorsystems ist die sehr gute Wasserstoffansprechbarkeit, die speziell für die Durchführung dieses Verfahrens notwendig ist. In diesem Verfahren muß in einer der beiden Stufen ein sehr niedermolekulares Polyethylen hergestellt werden, was normalerweise nur mit einer sehr hohen Wasserstoffkonzentration in der Gasphase erreichbar ist. Mit dem erfindungsgemäßen Katalysatorsystem können Produkte mit sehr niedrigem Molekulargewicht bereits bei deutlich niedrigeren Wasserstoffkonzentrationen als mit den bisher eingesetzten Katalysatorsystemen erreicht werden. Dadurch können einerseits höhere Ethylenpartialdrücke und damit höhere Kontaktausbeuten und andererseits ein geringerer Wasserstoffverbrauch erzielt werden. Außerdem sinkt die Katalysatoraktivität auch bei hohen Wasserstoffkonzentrationen im Gasraum des Reaktors weniger ab als bei bekannten Katalysatoren.

Ein weiterer entscheidender Vorteil des erfindungsgemäßen Verfahrens ist die sehr einfache Herstellung der Übergangsmetallkomponente des Katalysators. Diese wird durch einfaches Zusammenbringen der Einzelkomponenten unter den entsprechenden Reaktionsbedingungen erhalten. Eine in den meisten Fällen übliche Wäsche mit einem inerten Kohlenwasserstoff entfällt. Dadurch entsteht auch keine Waschlauge, die in weiteren Prozeß-Schritten erst wieder zersetzt und unter Anfall von Abwasser aufgearbeitet werden muß.

Weiterhin treten auch bei längerem kontinuierlichen Betrieb keine Polymerablagerungen an den Kesselwandungen und den Verbindungsleitungen auf.

Das erfindungsgemäße Verfahren liefert Ethylenpolymere für die Extrusion und Blasextrusion mit breiter bis sehr breiter Molmassenverteilung. Die Polymeren zeichnen sich durch exzellente Verarbeitungs- und Fertigteil-Eigenschaften aus. Man kann in diesem Verfahren durch Anpassung der Verfahrensparameter Folienrohstoffe, Rohrrohstoffe, Bändchenrohstoffe, Monofilrohstoffe und Kleinhohlkörperrohstoffe mit sehr guten und ausgewogenen Eigenschaften herstellen.

Die Folienrohstoffe zeichnen sich durch ihre gute Verarbeitbarkeit auf fast allen HDPE-Folienanlagen aus bei niedrigem Druckaufbau und hoher Blasenstabilität und guten Produktionseigenschaften wie Stippenarmut, guter Folienstruktur und hoher Zähigkeit.

Die Rohrrohstoffe besitzen bei guter Verarbeitbarkeit eine ausgezeichnete Zähigkeit- und Dichte-Spannungsrißrelation.

Die Bändchen- und Monofil-Rohstoffe sind auf Bändchen-und Monofilanlagen sicher verarbeitbar.

Die Kleinhohlkörperrohstoffe ergeben Formkörper mit sehr gutem Spannungsrißverhalten.

### Beispiele

Bei den nachfolgenden Beispielen wurde zur Herstellung der Katalysatorkomponente (a) und zur Polymerisation eine hydrierte Benzinfraktion mit einem Siedebereich von 120 bis 140°C verwendet.

Der Titangehalt der Katalysatoren wurde kolorimetrisch bestimmt. Mit jedem Katalysator wurde zunächst eine einstufige Testpolymerisation durchgeführt.

Die Schmelzindices MFI 190/5, MFI 190/15 und MFI 190/21,6 wurden nach DIN 53 735 bestimmt. Der MFR (21,6/5) berechnet sich aus dem Quotienten des MFI 190/21,6 zu MFI 190/5, der MFR (15/5) berechnet sich aus dem Quotienten des MFI 190/15 zu MFI 190/5.

Die Viskosität VZ wurde nach DIN 53 728 Blatt 4 mit einem Ubbelohde-Viskosimeter in Dekahydronaphthalin als Lösungsmittel bestimmt.

Die Bestimmung der Dichte erfolgte nach DIN 53 479, Verfahren A, die der Schüttdichte nach DIN 53 368.

Die Bestimmung der aₖ23°C Werte erfolgte nach DIN 53 453.

Die Bestimmung der Weiterreißfestigkeit längs bzw. quer (WFR(1) ; WRF(q)) erfolgte nach ISO 6383/2.

Die Bestimmung der Spannungsrißbeständigkeit erfolgte nach DIN 55 457, Teil 2, Beiblatt 1.

Die Messung der Dart drop-werte erfolgte nach ASTM D 1709-67 Methode A

Der Rohrzeitstand wurde nach DIN 8075, Abschnitt 2.3, Tab. 1 bestimmt.

### Beispiel 1

### 1.1 Herstellung der Katalysatorkomponente (a)

In einem 4 dm³ Rührgefäß wurden unter Ausschluß von Luft und Feuchtigkeit 57 g (= 500 mmol) Magnesiummethylat und 500 cm³ einer hydrierten Benzinfraktion vorgelegt. Unter Rühren und Argonüberlagerung wurden bei einer Temperatur von 100°C innerhalb von 2 h 500 cm³ einer 0,2 molaren Lösung von TiCl₄ in der Benzinfraktion zugegeben.

In die erhaltene Suspension wurde unter Rühren bei der gleichen Temperatur 500 mmol AlCl₂(C₂H₅) in 1000 cm³ der Benzinfraktion getropft, Zutropfdauer 2 h. Danach wurde weitere 2 h bei 100°C gerührt. Es entstand ein rötlichbrauner Niederschlag. Durch Bestimmung des Ti³⁺-Gehaltes und des Gesamt-Titangehaltes wurde der vollständige Umsatz des Titans in die dreiwertige Stufe festgestellt. Die Suspension enthielt 0,065 mol Ti/dm³. Ein Teil dieser Suspension wurde mit der Benzinfraktion auf eine Ti-Konzentration von 0,01 mol/dm³ verdünnt.

### 1.2 Ethylenpolymerisation

In einem 2 dm³-Stahlautoklaven, der mit 750 cm³ einer Benzinfraktion beschickt wurde, wurden bei 85°C unter N₂-Überlagerung 1,5 cm³ einer 1-molaren Triethylaluminium-Lösung und 1 cm³ der nach 1.1 hergestellten Suspension (0,01 mmol/dm³ bezogen auf Ti) gegeben. Danach wurden 3 bar Wasserstoff vorgelegt und 4 bar Ethylen aufgedrückt. Der Gesamtdruck von 7 bar wurde über 2 h gehalten, indem das verbrauchte Ethylen nachdosiert wurde. Die Polymerisation wurde durch Entspannen der Gase abgebrochen und das Polymere durch Filtration und Trocknung vom Dispergiermittel abgetrennt. Es wurden 225 g Polyethylen mit einem MFI 190/5 von 24 g/10 min und einem MFR (15/5) von 4,8 gebildet. Dies entspricht einer KZA_{red} von 2810 g/mmol · Ti · bar · h. Das Pulver hatte eine Schüttdichte von 0,39 g/cm³ und einen Feinkornanteil < 100 µm von 2,1 Gew.-%.

### 1.3 Kontinuierliche Zweistufenpolymerisation

In den ersten von zwei hintereinandergeschalteten 600 1-Rührkesseln wurden bei einer Temperatur von 83°C kontinuierlich 72 dm³/h Hexan 24 kg/h Ethylen, 1 mmol/h Katalysatorkomponente (a), hergestellt nach 1.1, und 36 mmol/h Triethylaluminium eingebracht. Wasserstoff wurde so zudosiert, daß sich ein Wasserstoffpartialdruck von 7,2 bar und ein Ethylenpartialdruck von 2 bar einstellte. Die entstehende Polymersuspension wurde über ein Tauchrohr mit einem Ventil, das mit einer Standhaltung des ersten Kessels verbunden war, in den zweiten Kessel überführt. In den zweiten Kessel wurden bei einer Temperatur von 80°C 24 kg/h Ethylen, 96 dm³/h Hexan, 48 mmol/h Aluminiumtriethyl und 3 dm³/h Buten-1 eingegeben. Im Gasraum des zweiten Kessels wurde durch Entfernen einer bestimmten Gasmenge ein Wasserstoff/Ethylen-Verhältnis von 0,18 eingestellt. Das Polymerisat aus dem zweiten Reaktor wurde in einer Zentrifuge weitgehend vom Hexan abgetrennt und im N₂-Strom getrocknet. Es entstanden 48 kg/h Ethylencopolymerisat mit einem MFI 190/5 von 0,64 g/10 min, einem MFR (21,6/5) von 26,5, einer Dichte von 0,944 g/cm³ und einer VZ von 340 cm³/g. Das Polymerisat aus der ersten Stufe besaß eine VZ von 40 cm³/g. Die KA betrug 48 kg/mmol Ti. Das Pulver wurde mit 0,2 Gew.-% Ca-Stearat und 0,1 Gew.-% Octadecyl-3-(3,5-di-t-butyl-4-hydroxyphenyl)-propionat stabilisiert und auf einer Zweischnecken-Granuliermaschine mit einem Durchsatz von 75 kg/h granuliert. Das Granulat hatte einen MFI 190/5 von 0,45 g/10 min, einem MFR (21,6/5) von 28,3, eine Dichte von 0,945 g/cm³ und eine VZ von 330 cm³/g.

Das Granulat ließ sich auf einem Rohrextruder zu einem Rohr (⌀ 32 mm) mit sehr glatter Rohroberfläche bei hohem Ausstoß verarbeiten. Das Rohr besaß neben einer sehr guten Zähigkeit (a_{k23°C} = 17,5 mJ/mm²) eine ausgezeichnete Haltbarkeit (σ₅ ≧ 6400 h) im Zeitstandversuch.

### Beispiele 2 bis 5

Die Polymerisation wurde, wie in Beispiel 1 beschrieben, mit dem gleichen Katalysatorsystem durchgeführt. Die Polymerisations- und Produktparameter sind in Tabelle 1 zusammengefaßt.

Nach Stabilisierung und Granulierung der Pulver auf dem oben beschriebenen Zweischnecken-Extruder erhielt man Granulate, aus denen sich auf einer HDPE-Folienblasanlage 20 µm-Folien mit ausgezeichneten Eigenschaften herstellen ließen (Tabelle 2).

### Beispiel 6

### 6.1 Herstellung der Katalysatorkomponente (a)

In einem 4 dm³ Rührgefäß wurden unter Ausschluß von Luft und Feuchtigkeit 71 g (= 500 mmol) Magnesiumisopropylat und 500 cm³ einer hydrierten, sauerstofffreien Benzinfraktion vorgelegt. Unter Rühren und Argonüberlagerung wurden bei einer Temperatur von 90°C innerhalb von 5 h 16,5 cm³ TiCl₄ (= 150 mmol), gelöst in 400 cm³ der Benzinfraktion zugegeben. Zu dererhaltenen Suspension wurden innerhalb von 2 h unter Rühren bei der gleichen Temperatur 400 mmol Al₂Cl₃(C₂H₅)₃ in 1000 cm³ der Benzinfraktion getropft. Danach wurde zwei Stunden bei 120°C gerührt. Es entstand ein dunkelbrauner Niederschlag. Die Suspension enthielt 0,076 mol Ti/dm³. Der Ti³⁺-Gehalt betrug 99 Gew.-%. Ein Teil dieser Suspension wurde mit der Benzinfraktion auf eine Ti-Konzentration von 0,01 mol/dm³ verdünnt.

### 6.2 Ethylenpolymerisation

In einem 2 dm³ Stahlautoklaven, der mit 750 cm³ einer hydrierten Benzinfraktion beschickt war, wurden bei 85°C unter N₂ 1,5 cm³ einer 1 molaren Triisobutylaluminium-Lösung und 1,5 cm³ der nach 6.1 hergestellten Suspension (0,015 mmol/dm³, bezogen auf Ti) gegeben. Danach wurden 3 bar Wasserstoff vorgelegt und 4 bar Ethylen aufgedrückt. Der Gesamtdruck von 7 bar wurde über 2 h gehalten, indem das verbrauchte Ethylen nachdosiert wurde. Das Polymerisat wurde durch Filtration und Trocknung vom Dispergiermittel abgetrennt. Es wurden 196 g Polyethylen mit einem MFI 190/5 von 19 g/10 min und einem MFR (15/5) von 5,0 gebildet. Dies entspricht einer KZA_{red} von 1630 g/mmol Ti bar h. Das Pulver hatte eine Schüttdichte von 0,38 g/cm³ und einen Feinkornanteil < 100 µm von 6,5 Gew.-%.

### Beispiele 7 bis 10 und Vergleichsbeispiele A und B

Unter den in Beispiel 1.3 beschriebenen Bedingungen wurden kontinuierliche Zweistufenpolymerisationen durchgeführt, wobei für die erfindungsgemäßen Beispiele die Katalysatorkomponente (a) gemäß Beispiel 6.1 verwendet wurde.

Für die Vergleichsbeispiele wurde die Katalysatorkomponente (a) gemäß Beispiel 5 der DE-AS 1 795 197 eingesetzt, welcher folgendermaßen hergestellt wurde :

11 g Mg(OC₂H₅)₂ wurden in 50 cm³ Dieselöl (Siedebereich 130 bis 160°C) suspendiert und mit 200 cm³ einer 1-molaren TiCl₄-Lösung in Dieselöl versetzt. Die Suspension wurde 15 Stunden unter Rückfluß gekocht. Anschließend wusch man den Niederschlag durch Dekantieren und Verrühren 6mal mit 150 cm³ Dieselöl. Das Volumen der Suspension wurde auf 250 cm³ aufgefüllt. 10 cm³ Suspension enthielten 2,1 mmol Titanverbindung.

Nach Stabilisierung und Granulierung der Pulver auf dem bereits beschriebenen Zweischneckenextruder erhielt man Granulate, deren Eigenschaften in Tabelle 2 zusammengestellt sind. Auf einer Folienblasanlage wurden 20 µm-Folien mit den in der Tabelle 2 angegebenenen Eigenschaften erhalten.

### Beispiel 11

### 11.1 Herstellung der Katalysatorkomponente (a)

In einem 4 dm³-Rührgefäß wurden unter Ausschluß von Luft und Feuchtigkeit 57 g (= 500 mmol) Magnesiumethylat und 500 cm³ einer hydrierten Benzinfraktion vorgelegt. Unter Rühren und Argonüberlagerung wurden bei einer Temperatur von 90°C innerhalb von 5 h 600 cm³ einer 0,2 molaren TiCl₃(OiC₃H₇)-Lösung in der Benzinfraktion zugetropft. In die erhaltene Suspension wurden anschließend bei 100°C innerhalb von 2 h 1000 cm³ einer 0,5-molaren Al₂Cl₃(C₂H₅)₃-Lösung in der Benzinfraktion zugetropft und der Ansatz weitere 2 Stunden bei dieser Temperatur gerührt. Der erhaltene Katalysatorteststoff enthielt alles Titan in der dreiwertigen Form. Die Suspension enthielt 0,056 mol Ti/dm³.

Ein Teil dieser Suspension wurde mit der Benzinfraktion auf eine Ti-Konzentration von 0,01 mol/dm³ verdünnt.

### 11.2 Ethylenpolymerisation

In einem 2 dm³-Stahlautoklaven, der mit 750 cm³ der Benzinfraktion beschickt war, wurden bei 85°C unter N₂ 1,5 cm³ einer 1-molaren Triethylaluminium-Lösung und 1 cm³ der nach 11.1 hergestellten Suspension (0,01 mmol/dm³, bezogen auf Ti) gegeben. Danach wurden 3 bar Wasserstoff vorgelegt und 4 bar Ethylen aufgedrückt. Der Gesamtdruck von 7 bar wurde über 2 h aufrechterhalten, indem das verbrauchte Ethylen nachdosiert wurde. Die Polymerisation wurde durch Entspannen der Gase abgebrochen und das Polymere durch Filtration und Trocknung vom Dispergiermittel abgetrennt. Es wurden 195 g Polyethylen mit einem MFI 190/5 von 28 g/10 min und einem MFR (15/5) von 4,6 gebildet. Dies entspricht einer KZA_{red} von 2440 g/mmol Ti bar h. Das Pulver hatte eine Schüttdichte von 0,41 g/cm³ und einem Feinkomanteil < 100 µm von 1,6 Gew.-%.

### Beispiele 12 bis 15 und Vergleichsbeispiele C und D

Die Polymerisation wurde, wie im Beispiel 1.3 beschrieben, jedoch bei den erfindungsgemäßen Beispielen mit dem unter 11.1 beschriebenen Katalysatorsystem durchgeführt Die Polymerisations- und Produktparameter sind in Tabelle 3 zusammengefaßt.

Für die Vergleichsbeispiele wurde die in DE-AS 1 795 197, Beispiel 1, hergestellte Katalysatorkomponente (a) eingesetzt, welche wie folgt hergestellt wurde :

11 g Mg(OC₂H₅)₂ wurden in 50 cm³ Dieselöl (Siedebereich 130 bis 160°C) suspendiert und mit 200 cm³ einer 1-molaren TiCl₂(OiC₃H₇)₂ Lösung in Cyclohexan versetzt. Die Suspension wurde 7 Stunden unter Rückfluß gekocht. Anschließend wusch man den Niederschlag durch Dekantieren und Verrühren 6mal mit 150 cm³ Cyclohexan. Das Volumen der Suspension wurde auf 250 cm³ aufgefüllt. 10 cm³ der Suspension enthielten 2,9 mmol Titanverbindung.

Nach Stabilisierung und Granulierung der Pulver auf dem bereits beschriebenen Zweischneckenextruder erhielt man die in Tabelle 2 zusammengefaßten Granulate.

Das Granulat aus Beispiel 12 und 13 wurde auf einer Bändchenanlage zu Bändchen verarbeitet. Es traten bei beiden Materialien keine Probleme auf. Die Bändchen zeigten eine sehr hohe Reißfestigkeit. Das Granulat aus Vergleichsbeispiel C ließ sich aufder gleichen Bändchenanlage wegen vieler Abrisse nur sehr schwer verarbeiten.

Das Granulat aus Beispiel 15 wurde auf einer Monofilanlage ohne Probleme zu Monofilware verarbeitet, die Verstreckbarkeit des Produktes war ausgezeichnet.

Das Granulat aus Beispiel 14 wurde auf einer Kleinhohlkörpermaschine zu Flaschen verarbeitet. Die Flaschen zeigten eine glatte, stippenarme Oberfläche. Das Produkt besaß neben einem a_{k23°C}-Wert von 16 mJ/mm² eine ausgezeichnete Spannungsrißbeständigkeit.

Das Produkt aus Vergleichsbeispiel D ließ sich zwar ebenfalls zu Flaschen verarbeiten, die Oberfläche war jedoch verstippt. Der a_{k23°C}-wert lag mit 12 mJ/mm deutlich niedriger und die Spannungsrißbeständigkeit war schlechter.

Außerdem kann man aus den Vergleichsbeispielen A bis D erkennen, daß das erfindungsgemäße Katalysatorsystem eine wesentlich höhere Kontaktaktivität besitzt. Die mit dem erfindungsgemäßen Katalysatorsystem hergestellten Produkte besitzen daher einen wesentlich niedrigeren Restkatalysatorgehalt.

### Vergleichsbeispiel E

Mit 1,0 mmol/h der Katalysatorkomponente (a) aus Beispiel 11.1, 24 kg/h Ethylen, 72 dm³/h Hexan, 36 mmol/h TEA und 0,1 dm³/h Buten wurde ein 600 dm³-Kessel bei 80°C kontinuierlich beschickt. Der Wasserstoff wurde so zudosiert, daß sich im Gasraum ein H₂/C₂H₄-Verhältnis von 0,38 einstellte. Die Polymersuspension wurde kontinuierlich ausgetragen, so daß sich im Kessel ein konstanten Füllvolumen von 480 dm³ einstellte. Das Polyethylen wurde durch Filtration abgetrennt und im N₂-Strom getrocknet. Es entstand ein Pulver mit einem MFI 190/5 von 0,40 g/10 min, einem MFR (21,6/5) von 10 und einer Dichte von 0,956 g/cm³ Durch Granulierung auf dem Zweischneckenextruder erhielt man ein Granulat mit einem MFI 190/5 von 0,28 g/10 min, einem MFR 21,6/5) von 9,8 und einer Dichte von 0,956 g/cm³. Das Material ließ sich auf der Blasfolienanlage nicht zu einer brauchbaren Folie verarbeiten. Die Folie zeigte eine sehr rauhe Oberfläche.

**Tabelle 1**

| Stufe | Beispiel | | 2 | 3 | 4 | 5 |
|---|---|---|---|---|---|---|
| 1 | Temperatur | °C | 83 | 83 | 83 | 83 |
| | Komponente (a) | mmol/h | 1,0 | 1,15 | 1,2 | 1,4 |
| | Ethylen | kg/h | 24 | 26 | 24 | 28 |
| | Hexan | dm³/h | 72 | 78 | 72 | 84 |
| | AlR₃ | mmol/h | 36 (TEA) | 39 (TEA) | 36 (TIBA) | 42 (TIBA) |
| | H₂/C₂H₄ | | 3,6 | 3,6 | 4,0 | 4,0 |
| | VZ | cm³/g | 50 | 46 | 60 | 70 |
| 2 | Temperatur | °C | 80 | 80 | 80 | 80 |
| | Ethylen | kg/h | 24 | 22 | 24 | 20 |
| | Hexan | dm³/h | 96 | 88 | 96 | 80 |
| | AlR₃ | mmol/h | 48 (TEA) | 44 (TEA) | 48 (TIBA) | 40 (TIBA) |
| | H₂/C₂H₄ | | 0,18 | 0,13 | 0,18 | 0,14 |
| | 1-Buten | dm³/h | 0,1 | 0,1 | 2,1 | 2,5 |
| Pulver | VZ | cm³/g | 360 | 390 | 360 | 380 |
| | MFI 190/5 | g/10 min | 0,45 | 0,38 | 0,50 | 0,55 |
| | MFR (21,6/5) | | 28 | 34 | 27 | 36 |
| | d | g/cm³ | 0,956 | 0,957 | 0,948 | 0,948 |
| | KA | kg/mmol | 48 | 42 | 40 | 34 |
| Granulate | MFI 190/5 | g/10 min | 0,32 | 0,25 | 0,28 | 0,27 |
| | MFR (21,6/5) | | 29 | 36 | 28 | 36 |
| | d | g/cm³ | 0,957 | 0,957 | 0,949 | 0,948 |
| Folien | Stippen/1000cm² | | 10 | 18 | 13 | 22 |
| | DD | g | 300 | 380 | 260 | 290 |
| | WRF (q) | N | 5,2 | 5,5 | 7,2 | 7,8 |
| | WRF (l) | N | 4,1 | 4,3 | 6,5 | 6,8 |
| | Struktur | | | | | |
| TEA: Triethylaluminium TIBA: Tri-i-butyl-aluminium DD: Dart drop-Wert WRF: Weiterreißfestigkeit | | | | | | |

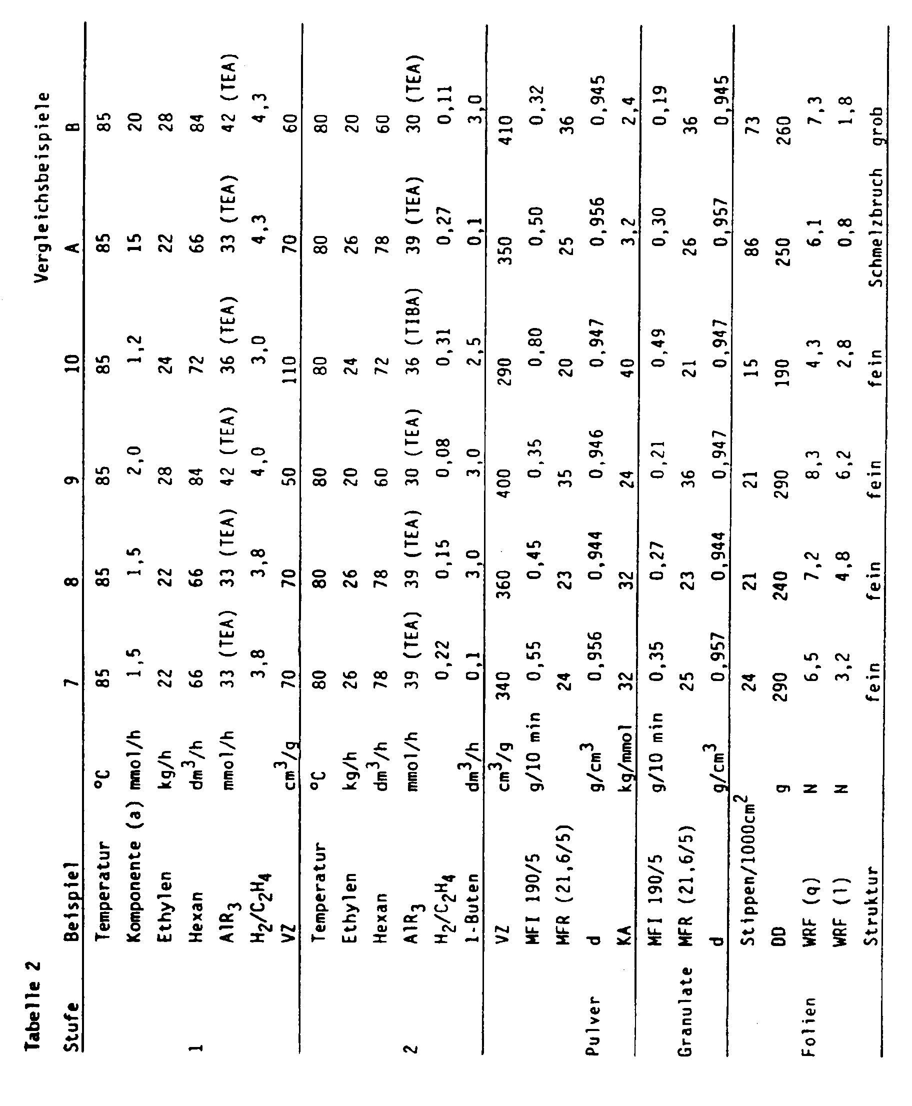

**Tabelle 3**

| Stufe | Beispiel | | 12 | 13 | 14 | 15 | Vergleichsbeispiele | |
|---|---|---|---|---|---|---|---|---|
| | | | | | | | C | D |
| 1 | Temperatur | °C | 80 | 80 | 80 | 80 | 80 | 80 |
| | Komponente (a) | mmol/cm³ | 1,5 | 1,7 | 1,9 | 1,4 | 18 | 22 |
| | Ethylen | kg/h | 24 | 26 | 26 | 24 | 24 | 26 |
| | Hexan | dm³/h | 72 | 78 | 78 | 72 | 72 | 78 |
| | AlR₃ | mmol/h | 36 (TEA) | 39 (TEA) | 39 (TEA) | 36 (TEA) | 36 (TEA) | 36 (TEA) |
| | H₂/C₂H₄ | | 1,2 | 1,2 | 2,0 | 0,7 | 1,8 | 2,5 |
| | VZ | cm³/g | 160 | 150 | 100 | 200 | 140 | 110 |
| 2 | Temperatur | °C | 80 | 80 | 80 | 80 | 80 | 80 |
| | Ethylen | kg/h | 24 | 22 | 22 | 24 | 24 | 22 |
| | Hexan | dm³/h | 72 | 66 | 66 | 72 | 72 | 72 |
| | AlR₃ | mmol/h | 36 (TEA) | 33 (TEA) | 33 (TEA) | 36 (TEA) | 36 (TEA) | 36 (TEA) |
| | H₂/C₂H₄ | | 0,4 | 0,32 | 0,25 | 0,5 | 0,6 | 0,29 |
| | 1-Buten | dm³/h | 2,0 | 2,1 | 2,2 | 0,15 | 2,1 | 2,2 |
| Pulver | VZ | cm³/g | 250 | 260 | 280 | 240 | 250 | 290 |
| | MFI 190/5 | g/10 min | 1,7 | 1,6 | 1,6 | 1,8 | 1,75 | 1,5 |
| | MFR (81,6/5) | | 14 | 16 | 19 | 11 | 13 | 20 |
| | d | g/cm³ | 0,945 | 0,946 | 0,948 | 0,955 | 0,946 | 0,949 |
| | KA | kg/mmol | 32 | 28 | 25 | 34 | 2,7 | 2,2 |
| Granulate | MFI 190/5 | g/10 min | 1,6 | 1,5 | 1,4 | 1,6 | 1,6 | 1,3 |
| | MFR (21,6/5) | | 15 | 16 | 20 | 10 | 14 | 21 |
| | d | g/cm³ | 0,946 | 0,946 | 0,949 | 0,956 | 0,947 | 0,949 |

## Patentansprüche

1. Verfahren zur kontinuierlichen Herstellung eines Polyolefins durch zweistufige Polymerisation von Ethylen mit 0 bis 10 Gew.-%, bezogen auf die Gesamtmenge der Monomeren, eines 1-Olefins der Formel R⁶-CH=CH₂, worin R⁶ einen geradkettigen oder verzweigten Alkylrest mit 1 bis 12 C-Atomen bedeutet, in Suspension oder in der Gasphase, bei einer Temperatur von 20 bis 120°C und einem Druck von 2 bis 60 bar, in Gegenwart eines Mischkatalysators, bestehend aus einer Übergangsmetallkomponente (Komponente (a)), welche das Reaktionsprodukt eines Magnesiumalkoholats mit einer Titanverbindung und einer aluminiumorganischen Verbindung ist, und einer aluminiumorganischen Verbindung, unter Regelung der mittleren Molmasse durch Wasserstoff, dadurch gekennzeichnet, daß die Polymerisation in Gegenwart eines Mischkatalysators durchgeführt wird, dessen Komponente (a) durch Umsetzung eines in einem inerten Dispergiermittel suspendierten Magnesiumalkoholats der Formel (I)
Mg(OR¹)(OR²) (I),
worin R¹ und R² gleich oder verschieden sind und einen Alkylrest mit 1 bis 6 C-Atomen bedeuten, mit einer Titan-IV-verbindung der Formel (II)
TiXₘ(OR³)₄₋ₘ (II),
worin R³ einen Alkylrest mit 1 bis 6 C-Atomen und X ein Chloratom bedeuten und m eine Zahl von 2 bis 4 ist, und anschließende Reaktion des entstandenen Feststoffes mit einer aluminiumorganischen Verbindung der Formel (III)
AlR⁴ₙX₃₋ₙ (III),
worin R⁴ einen Alkylrest mit 1 bis 12 C-Atomen und X ein Chloratom bedeuten und n eine Zahl von 1 bis 2 ist, hergestellt wurde und kontinuierlich ausschließlich in die erste Polymerisationsstufe eingebracht wird, und wobei die Komponente (b) des Mischkatalysators ein Aluminiumtrialkyl mit 1 bis 12 C-Atomen in den Alkylresten oder Aluminiumisoprenyl ist und (b) ebenfalls kontinuierlich in die erste Stufe, gegebenenfalls zusätzlich in die zweite Stufe eingebracht wird, das Molverhältnis von Komponente (a) zu Komponente (b), bezogen auf Titan und Aluminium, 1:1 bis 1:500 beträgt, das Molverhältnis Wasserstoff zu Ethylen im Gasraum in der einen Polymerisationsstufe 1:0,01 bis 1:0,5 und in der anderen Polymerisationsstufe 1:0,1 bis 0,1:8 ist und das Mengenverhältnis der in beiden Polymerisationsstufen gebildeten Polyolefine 30:70 bis 70:30 beträgt, wobei das in der Reaktionsstufe 1 gebildete Polymere kontinuierlich in die Stufe 2 überführt wird und das endgültige Polymergemisch aus Stufe 2 abgezogen wird.

## Claims

1. A process for the continuous preparation of a polyolefin by two-stage polymerization of ethylene with 0 to 10% by weight, based on the total amount of monomers, of a 1-olefin of the formula R⁶-CH=CH₂, in which R⁶ denotes a straight-chain or branched alkyl radical with 1 to 12 carbon atoms, in suspension or in the gas phase, at a temperature of 20 to 120°C under a pressure of 2 to 60 bar, in the pre-sence of a mixed catalyst consisting of a transition metal component (component (a)), which is the reaction product of a magnesium alcoholate with a titanium compound and an organoaluminum compound, and an organoaluminum compound, the average molecular mass being regulated by hydrogen, which comprises carrying out the polymerization in the presence of a mixed catalyst, component (a) of which has been prepared by reaction of a magnesium alcoholate, suspended in an inert dispersing agent, of the formula (I)
Mg(OR¹)(OR²) (I)
in which R¹ and R² are identical or different and denote an alkyl radical with 1 to 6 carbon atoms, with a titanium-IV compound of the formula (II)
TiXₘ(OR³)₄₋ₘ (II)
in which R³ denotes an alkyl radical with 1 to 6 carbon atoms and X denotes a chlorine atom and m is a number from 2 to 4, and subsequent reaction of the resulting solid with an organoaluminum compound of the formula (III)
AlR⁴ₙX₃₋ₙ (III)
in which R⁴ denotes an alkyl radical with 1 to 12 carbon atoms and X denotes a chlorine atom and n is a number from 1 to 2, and is introduced continuously exclusively into the first polymerization stage, and component (b) of the mixed catalyst being a trialkylaluminum with 1 to 12 carbon atoms in the alkyl radicals or isoprenylaluminum, and (b) also being introduced continuously into the first stage, if desired additionally into the second stage, the molar ratio of component (a) to component (b), based on titanium and aluminum, being 1:1 to 1:500, the molar ratio of hydrogen to ethylene in the gas space being 1:0.01 to 1:0.5 in the one polymerization stage and 1:0.1 to 0.1:8 in the other polymerization stage, and the ratio of the amounts of polyolefins formed in the two polymerization stages being 30:70 to 70:30, the polymer formed in reaction stage 1 being transferred continuously into stage 2 and the final polymer mixture being drawn off from stage 2.

## Revendications

1. Procédé de préparation en continu d'une polyoléfine par polymérisation de l'éthylène en deux étapes avec 0 à 10 % en poids, par rapport à la quantité totale des monomères, d'une 1-oléfine de formule R⁶-CH=CH₂, où R⁶ représente un reste alkyle à chaîne linéaire ou ramifiée ayant de 1 à 12 atomes de carbone, en suspension ou en phase gazeuse, à une température de 20 à 120 °C et sous une pression de 2 à 60 bar, en présence d'un catalyseur mixte, constitué, d'un composant à base d'un métal de transition (composant (a)), qui est le produit de la réaction d'un alcoolate de magnésium avec un composé de titane et d'un composé organo-aluminié, avec un composé organo-aluminique, avec régulation de la masse molaire moyenne par l'hydrogène, caractérisé en ce que la polymérisation est mise en oeuvre en présence d'un catalyseur mixte dont on a préparé le composant (a) par réaction d'un alcoolate de magnésium, en suspension dans un dispersant inerte, de formule (I)
Mg(OR¹)(OR²) (I)
où R¹ et R² sont identiques ou différents, et représentent chacun un reste alkyle ayant de 1 à 6 atomes de carbone, avec un composé de titane-IV de formule (II)
TiXₘ(OR³)₄₋ₘ (II)
où R³ est un reste alkyle ayant de 1 à 6 atomes de carbone et X est un atome de chlore, et m est un nombre de 2 à 4, et suivie de la réaction des produits solides obtenus avec un composé organoaluminié de formule (III) :
AlR⁴ₙX₃₋ₙ (III)
où R⁴ représente un reste alkyle ayant de 1 à 12 atomes de carbone et X est un atome de chlore et n est un nombre de 1 à 2, et que l'on introduit en continu exclusivement dans la première étape de polymérisation, et où le composant (b) du catalyseur mixte étant un trialkylaluminium, ayant de 1 à 12 atomes de carbone dans le reste alkyle, ou l'isoprénylaluminium, et (b) étant également continuellement introduit dans la première étape, éventuellement, en plus, dans la seconde étape, le rapport molaire du composant (a) au composant (b), par rapport au titane et à l'aluminium, est de 1:1 à 1:500, le rapport molaire de l'hydrogène à l'éthylène dans l'espace gazeux dans l'une des étapes de polymérisation est de 1:0,01 à 1:0,5, et de 1:0,1 à 0,1:8 dans l'autre étape de polymérisation et la proportion pondérale des polyoléfines formées dans les deux étapes de polymérisation est de 30:70 à 70:30, le polymère formé, dans la première étape réactionnelle étant transféré en continu dans la seconde étape, et le mélange de polymère final est soutiré de la deuxième étape.
